# EUROPÄISCHE PATENTSCHRIFT

(11) **EP 1 252 043 B1**
(45) Veröffentlichungstag und Bekanntmachung des Hinweises auf die Patenterteilung: **20.10.2004**
(21) Anmeldenummer: 01927859.7
(22) Anmeldetag: 03.04.2001
(51) Int. Cl.: B60R 13/02, B60J 5/04

(54) **KRAFTFAHRZEUGTÜR MIT ISOLATIONSELEMENT**
MOTOR VEHICLE DOOR COMPRISING AN INSULATING ELEMENT
PORTIERE DE VEHICULE AUTOMOBILE POURVUE D'UN ELEMENT ISOLANT

(30) Priorität: 04.04.2000 DE 10016758
(43) Veröffentlichungstag der Anmeldung: 30.10.2002
(73) Patentinhaber: Carcoustics Tech Center GmbH, 51381 Leverkusen (DE)
(72) Erfinder: BLÖMELING, Heinz, 42799 Leichlingen (DE); GNÄDIG, Christian, 53894 Mechernich (DE); JENNY, Martin, A-6800 Feldkirch (AT)
(74) Vertreter: COHAUSZ & FLORACK
(86) Internationale Anmeldenummer: PCT/EP2001/003767
(87) Internationale Veröffentlichungsnummer: WO 2001/074623

(56) Entgegenhaltungen:
- DE-A- 3 603 518
- DE-A- 4 416 972
- DE-A- 19 501 292
- FR-A- 2 235 612
- US-A- 5 111 619
- US-A- 5 345 720
- US-A- 5 473 125

## Beschreibung

Die Erfindung betrifft ein Isolationselement zur Anordnung zwischen einer Innenwand einer Kraftfahrzeugtür und einem an der Innenwand der Kraftfahrzeugtür zu befestigenden Verkleidungsteil, wobei das Isolationselement als Schaumstofflage ausgebildet und randseitig zwischen dem Verkleidungsteil und der Innenwand in einem Klemmbereich verklebungsfrei einklemmbar ist.

Eine Kraftfahrzeugtür mit Isolationselement ergibt sich beispielsweise aus der DE 198 04 781 A1.

Ein klemmendes Zwischenfassen einer folienkaschierten Schaumstofflage als Isolationselement ist der DE 35 10 018 C2 entnehmbar. Im in dieser Art verbindenden Randbereich ist noch eine selbsthaftende Kleberschicht aufgebracht.

Bekannt ist es auch, die Halterung des Isolationselements über eine Butylkautschuk-Raupe zu sichern. Das erweist sich als fertigungsaufwendig und birgt die Gefahr eines "Ausblutens" dieses Dichtungs-Haftmittels.

Die gattungsbildende DE 44 16 972 A1 offenbart ein Verkleidungselement für die Tür eines Fahrzeuges zur Isolierung akustisch störender Schwingungen. Das Verkleidungselement umfasst einen geschlossenzelligen Schaumstoffkörper, der zwischen der Tür und der Innenraumverkleidung kraft- und/oder formschlüssig und zugleich dichtend angeordnet ist. Der Schaumstoffkörper ist dabei im Bereich des Außenumfangs der Innenraumverkleidung auf der der Tür zugewandten Seite festgelegt und überdeckt die Innenraumverkleidung im wesentlichen vollständig.

Die FR-A-2 235 612 offenbart eine Vorrichtung zur Befestigung von Platten, bei der eine Plattenkante in einen Aufnahmekanal eines U-förmigen Profils hineinragt, wobei an mindestens einer Innenseite eines Schenkels des U-förmigen Profils eine Nut ausgebildet ist, in der ein flexibler, elastischer Körper einsetzbar ist, der eine im wesentlichen kreisrunde Querschnittsfläche aufweist und im Montagezustand die Platte gegen den gegenüberliegenden Schenkel des U-förmigen Profils drückt. Bei dem dort in den Zeichnungen dargestellten Ausführungsbeispiel handelt es sich um die Befestigung von Platten einer Balustrade. Die FR-A-2 235 612 betrifft somit kein Isolationselement der eingangs genannten Art.

Die DE 195 01 292 A1 offenbart eine Wandverkleidung für den Innenraum eines Kraftfahrzeuges. Die Wandverkleidung weist ein Wandverkleidungselement mit einer der zu verkleidenden Innenwand zugewandten Innenseite und einer dem Innenraum zugewandten Außenseite auf. Das Wandverkleidungselement ist mit einem Trägerteil an der Innenseite und einer mit dem Trägerteil verbundenen Kaschiermaterialschicht an der Außenseite versehen. Die Kaschiermaterialschicht besteht aus einer Zwischenschicht und einer Dekorschicht und ist im Randbereich des Wandverkleidungselements durch Verpressung in ihrer Gesamtdicke reduziert. Zumindest entlang eines Teilabschnitts des Randes des Wandverkleidungselements ist ein Akustik-Dichtungsprofil angeordnet, das das Wandverkleidungselement im Bereich der Verpressung umgreift und mit der Kaschiermaterialschicht sowie dem Trägerteil durch Anspritzen verbunden ist.

Der vorliegenden Erfindung liegt die Aufgabe zugrunde, ein weiteres Isolationselement der eingangs genannten Art zu schaffen, das sich am Türkorpus mit einfachen Mitteln verklebungsfrei und zuverlässig anbringen lässt und zugleich eine Abdichtungsfunktion übernehmen kann.

Erfindungsgemäß wird diese Aufgabe durch ein Isolationselement mit den im Anspruch 1 angegebenen Merkmalen gelöst. Der Anspruch 1 umfasst zwei alternative Ausführungen.

Weitere Ausgestaltungen des erfindungsgemäßen Isolationselements sind in den Unteransprüchen angegeben.

In einer ersten Ausführung weist das erfindungsgemäße Isolationselement einen wulstförmigen Schaumstoffkörper auf, der in einer in dem Isolationselement randseitig im Klemmbereich ausgebildeten Nut gehalten ist, wobei die Nut in der der Kraftfahrzeugtür abgewandten Seite des Isolationselements ausgebildet ist, sodass der Schaumstoffkörper nach Befestigung des Verkleidungsteils an der Innenwand der Kraftfahrzeugtür unter Klemmwirkung am Verkleidungsteil anliegt, und im Bereich der Nut an der der Kraftfahrzeugtür zugewandten Seite des Isolationselements eine Ausstülpung für dessen formschlüssige Halterung an einer Formschluss-Randausprägung der Innenwand der Kraftfahrzeugtür ausgeprägt ist.

Zufolge solcher Ausgestaltung ist ein vereinfachter, jedoch gleichwohl wirksamer Verbund zwischen den aneinander zu halternden Teilen erreicht. Die Anwendung einer Formschluss-Profilierung zwischen dem Verkleidungsteil und der Innenwand begünstigt die Klemmwirkung. Von Vorteil ist es zudem, dass die Formschluss-Profilierung einer Formschluss-Randausprägung der Innenwand entspricht. Diese Mittel können beim Blechprägen der Innenwand gleich mit berücksichtigt sein. Konkret ist die Formschluss-Randausprägung in Richtung zur Außenwand hin vorgewölbt. Die Teile können bei Fertigung in diesem Sinne sogar vormontiert werden. Eine diesbezüglich besonders vorteilhafte Lösung besteht darin, dass die Formschluss-Randausprägung mindestens einen Hinterschnitt aufweist. Der erhöht den mechanischen Halt zwischen beiden Teilen, ohne dass schon die Klemmung angewandt sein müsste, die nach entsprechender Vormontage erst bei der schließlichen Fertigung der Kraftfahrzeugtür auftritt.

In einer alternativen Ausführung weist das erfindungsgemäße Isolationselement wiederum einen wulstförmigen Schaumatoffkörper auf, der in einer in dem Isolationselement randseitig im Klemmbereich ausgebildeten Nut gehalten ist, wobei die Nut in diesem Fall jedoch in der der Kraftfahrzeugtür zugewandten Seite des Isolationselements ausgebildet ist, sodass der Schaumstoffkörper nach Befestigung des Verkleidungsteils an der Innenwand der Kraftfahrzeugtür unter Klemmwirkung an der Innenwand der Kraftfahrzeugtür anliegt, und im Bereich der Nut an der der Kraftfahrzeugtür abgewandten Seite des Isolationselements eine Ausstülpung ausgeprägt ist, die bezüglich des Verkleidungsteils einen Freiraum definiert.

Der Schaumstoffkörper liegt direkt an der Innenwand an. Im Verein mit der Klemmwirkung bringt dieser eine überraschend lagebremsende Eigenschaft auf. Die Lagensicherung ist hervorragend.

Weiter bringt die Erfindung in Vorschlag, dass der Schaumstoffkörper randseitig umlaufend angeordnet ist. Das kann bis hin zu einem dichtenden Abschluss gehen, vor allem, wenn ein verhautendes Einziehen der Poren beabsichtigt ist. Es wird auf PUR-Schaumstoff zurückgegriffen. Der Schaumstoffköper ist ein auf das Isolationselement aufgeschäumter Schaumstoffwulst. Dabei ist es zuordnungsvorteilhaft, dass das Isolationselement eine Nut aufweist, in die der aufgeschäumte Schaumstoff mit einem Fuß verankernd hineinragt. Das ergibt zwischen diesen Teilen einen vorteilhaften Formschluss. Außerdem ist eine Legespur nutzbar für das Ein- bzw. Aufschäumen des Schaumstoffes. Dabei erweist es sich klemmtechnisch noch als nützlich wenn das Verkleidungsteil, zugewandt dem Schaumstoffkörper, eine wulstartige Verdickung aufweist. Eine derart im Rücken des Schaumstoffkörpers wirksame exponierte Rippe fungiert als wirksamer Niederhalter, so dass der in aller Regel quergewölbte Schaumstoffwulst lagedefiniert komprimiert wird.

Nachfolgend wird die Erfindung anhand einer zwei Ausführungsbeispiele veranschaulichen Zeichnung näher erläutert. Es zeigen:
- Fig. 1: eine Kraftfahrzeugtür in Seitenansicht, bei weggelassenem Verkleidungsteil;
- Fig. 2: eine Schnittansicht eines Abschnitts eines eine Formschluss-Profilierung aufweisenden Isolations-elements im Klemmbereich zwischen einer Innenwand einer Kraftfahrzeugtür und einem an der Innenwand der Kraftfahrzeugtür zu befestigenden Verkleidungsteil; und
- Fig. 3: eine Schnittansicht eines Abschnitts eines Isolationselements gemäß einer Variante im Klemmbereich zwischen einer Innenwand einer Kraftfahrzeugtür und einem an der Innenwand der Kraftfahrzeugtür zu befestigenden Verkleidungsteil.

Die. dargestellte Kraftfahrzeugtür 1 ist aus mehreren Hauptbestandteilen zusammengesetzt. Die sind, von außen nach innen gehend, zunächst eine Außenwand 2 und eine Innenwand 3. Die bestehen vorzugsweise aus Blech und weisen eine typenentsprechende Struktur auf.

In dieser Weise angepasst, ist des Weiteren zum Fahrerraum innenseitig liegend, ein Verkleidungsteil 4 zugeordnet. Dieses besteht in der Regel aus Kunststoff mit sichtseitig liegender textiler oder dergleichen Abdekkung.

Zwischen Innenwand 3 und Verkleidungsteil 4 befindet sich schließlich ein Isolationselement 5.

Das Isolationselement 5 besteht aus einer Schaumstofflage. Bevorzugt handelt es sich um geschlossenporiges Material (40 - 50 kg/m³). Die Innenwand 3, das Verkleidungsteil 4 und das Isolationselement 5 sind von solchem Umriss, dass peripher eine gemeinsame Verbindungszone realisierbar ist; randseitig ist nämlich zwischen der Innenwand 3 und dem Verkleidungsteil 4 das Isolationselement 5 eingeklemmt. Der diesbezügliche Klemmbereich ist mit K bezeichnet.

Klemmbacken stellende Hartteile sind dabei ein Randbereich 3' der Innenwand 3 sowie ein Randbereich 4' des Verkleidungsteils 4. Die Klemmkraft P wirkt quer zur dargestellten allgemeinen Erstreckungsebene der geschilderten Hauptbestandteile der Kraftfahrzeugtür 1. Über die bloße Klemmwirkung hinaus tritt eine Sperrwirkungskomponete quer zur Richtung der Klemmkraft P auf.

Das konkretisiert sich darin, dass das elastische Isolationselement 5 im Klemmbereich K unter Ausbildung einer Formschluss-Profilierung zwischen dem Verkleidungsteil 4 und der Innenwand 3 gehaltert ist. Diese Halterung ist verklebungsfrei. Es liegt zugleich eine hochgradige Abdichtung vor.

Die Formschluss-Profilierung entspricht einer Formschluss-Randausprägung 6 der Innenwand 3. Bezüglich der Formschluss-Randausprägung 6 handelt es sich um eine im Blechprägevorgang gleich mit zu berücksichtigende Sickung 7, von der Außenseite der Fahrzeugtür 1 her vorgenommen. Die Sickung 7 ist unterbrechungsfrei umlaufend ausgeführt.

Die Sickung 7 liegt auf der dem Isolationselement 5 zugewandten Seite der Innenwand 3. Erkennbar ist auch ein Hinterschnitt 13. Die Flanken stellen die Hinterschnittgegenflächen des Isolationselements 5. Der Hinterschnitt 13 dieser Formschluss-Randausprägung 6 ist von relativ geringer Höhe. Selbstredend kann eine tiefergehende Sickung vorgenommen sein. Bei dieser Variante ist die Schaumstofflage des Isolationselements 5 von praktisch durchgehender Dicke, wobei die in die Sickung ragende Ausstülpung 28 der Lage komprimiert ist, und zwar etwa auf die Hälfte der Ausgangsdicke der Schaumstofflage zurückgehend.

Das in Richtung der Außenwand 2 gehende Ausstülpen zur Schaffung der dortigen Formschluss-Randausprägung 6 hinterlässt im Rücken der Randausprägung 6 eine Nut 14. Diese auch durch Vorprägung des Isolationselements 5 erzeugbare Nut 14 ist verfüllt. Als Füllmittel dient Schaumstoff. Der entstehende Schaumstoffwulst trägt das Bezugszeichen 15. Es kann sich um Ortschaum handeln. Der geht mit dem Bereich der Nut 14 und deren Flanken wie auch Ausläufer in Form gerundeter Nutränder eine innige Verbindung ein, beibehaltend die erstrebte Dichtwirkung.

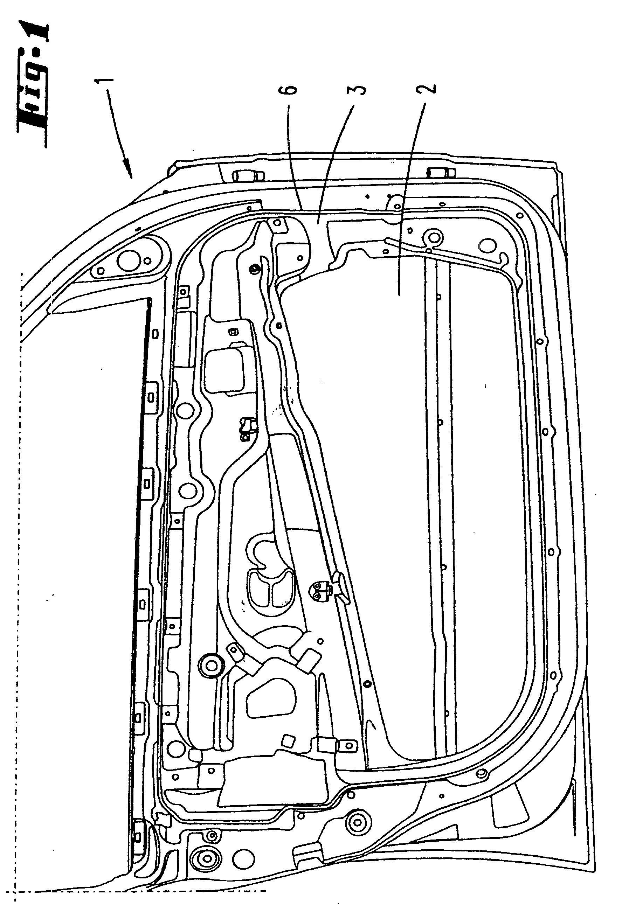

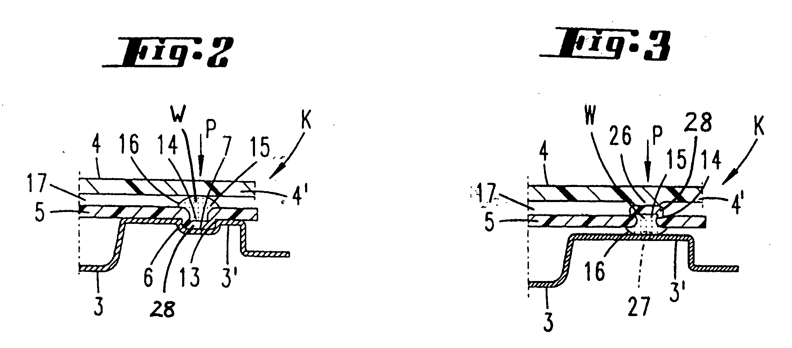

Wie Fig. 2 weiter entnehmbar, ist die Decke 16 des Schaumstoffwulstes 15 über die ganze Breite gehend quer konvex gewölbt. Dem Klemmbereich K wird dort ein kompressibler Vorsprung dargeboten. Die Klemmung kann unter Nutzung des Spaltmaßes des zumindest randnah gegebenen Freiraumes 17 zwischen dem Verkleidungsteil 4 und dem Isolationselement 5 intensiv ausgeübt werden. Mittig kann zumindest partiell Anlage vorliegen.

Gemäß Variante Fig. 3 tritt an die Stelle einer Formschluss-Profilierung zwischen Innenwand 3 und dem Isolationselement 5 ein bremsend wirkender, komprimierbarer Weichkörper W. Es handelt sich um eine Raupe aus PUR-Schaum. Zur körperlichen Verdeutlichung ist zusätzlich das Bezugszeichen 15 angewandt, betreffend den in der Grundversion erörterten Schaumstoffwulst.

Im dargestellten peripheren Klemmbereich K der Kraftfahrzeugtür 1 sitzt an der der Innenwand 3 zugewandten Seite des Isolationselementes 5, daran fixiert, der Weichkörper W. Die Verhaftung damit ist thermischer Art.

In Herbeiführung bzw. Aufbringung der Klemmkraft in der oben geschilderten Weise wird der Weichkörper W komprimiert. Er wirkt so im Sinne horizontal bzw. in der Türebene aufkommender Verlagerungskräfte praktisch bremsblockierend (etwa einem Radiergummi vergleichbar). Das eröffnet die erstrebte verklebungsfreie Halterung zwischen den Lagen bzw. Elementen auch hier.

Der Weichkörper W respektive Schaumstoffwulst 15 liegt mit seiner gewölbten Fläche, durchweg bezeichnet als Decke 16, an der Innenwand 3 an. Letztere ist im Bereich des Weichkörpers W glattflächig ausgebildet.

Der Weichkörper W ist auch bei dieser Variante umlaufend angeordnet, d.h. randbeabstandet.

Die Einbringung der Weichkörper-Raupe in Form des Schaumstoffwulstes 15 geschieht durch Aufschäumen auf das Isolationselement 5.

Das Isolationselement 5 weist auch gemäß Fig. 3 eine Nut 14 auf, die aber in spiegelbildlicher Ausrichtung zur Version gemäß Fig. 2 öffnet. Die Nut bzw. ihre Öffnung ist demgemäß der Innenwand 3 zugewandt.

Diese Ausgestaltung ergibt einen vorteilhaften Graben für die Fixierung des Weichkörpers W, indem der aufgeschäumte Schaumstoffwulst 15 mit einem Fuß verankernd in der Nut angebunden ist. Die Nut 14 ist erkennbar auch hier leicht hinterschnitten, so dass sich zumindest eine vergrößerte Anhaftfläche an den Nutflanken ergibt, bis hin zu den gerundeten Ausläufern dieser Flanken.

Zur Übertragung der Klemmdruckwirkung auf den Weichkörper weist das Verkleidungsteil 4 eine Verdikkung 26 auf. Die ist dem Rücken des Weichkörpers W zugewandt. Sie wirkt unmittelbar gegen den Boden des Nutgrundes der in Richtung des Verkleidungsteils 4 ausgestellten Nutzone der Nut 14. Das Isolationselement 5 weist hier somit eine Ausstülpung 28 auf. Über die wulstartige Verdickung, die im Querschnitt etwa trapezförmig ausgebildet ist, ergibt sich ein gezieltes Andrücken im Verein mit der dort aufgebrachten Klemmkraft.

Wie der Darstellung Fig. 3 entnehmbar, kann auch noch eine Ausdrückung 27 der Innenwand 3 in Richtung des Weichkörpers exponieren, so dass Letzterer wie zwischen zwei Backen klemmend gehalten ist, was sich verrutschsichernd auf das zwischengefasste Isolationselement auswirkt.

## Patentansprüche

1. Isolationselement (5) zur Anordnung zwischen einer Innenwand (3) einer Kraftfahrzeugtür (1) und einem an der Innenwand (3) der Kraftfahrzeugtür zu befestigenden Verkleidungsteil (4), wobei das Isolationselement (5) als Schaumstofflage ausgebildet und randseitig zwischen dem Verkleidungsteil (4) und der Innenwand (3) in einem Klemmbereich (K) verklebungsfrei einklemmbar ist,
**gekennzeichnet durch**
einen wulstförmigen Schaumstoffkörper (W, 15), der in einer in dem Isolationselement (5) randseitig im Klemmbereich (K) ausgebildeten Nut (14) gehalten ist, wobei
a) die Nut (14) in der der Kraftfahrzeugtür (1) abgewandten Seite des Isolationselements (5) ausgebildet ist, sodass der Schaumstoffkörper (W, 15) nach Befestigung des Verkleidungsteils (4) an der Innenwand (3) der Kraftfahrzeugtür (1) unter Klemmwirkung am Verkleidungsteil (4) anliegt, und im Bereich der Nut (14) an der der Kraftfahrzeugtür (1) zugewandten Seite des Isolationselements (5) eine Ausstülpung (28) für dessen formschlüssige Halterung an einer Formschluss-Randausprägung (6) der Innenwand (3) der Kraftfahrzeugtür (1) ausgeprägt ist, oder
b) die Nut (14) in der der Kraftfahrzeugtür (1) zugewandten Seite des Isolationselements (5) ausgebildet ist, sodass der Schaumstoffkörper (W, 15) nach Befestigung des Verkleidungsteils (4) an der Innenwand (3) der Kraftfahrzeugtür (1) unter Klemmwirkung an der Innenwand (3) der Kraftfahrzeugtür (1) anliegt, und im Bereich der Nut (14) an der der Kraftfahrzeugtür (1) abgewandten Seite des Isolationselements (5) eine Ausstülpung (28) ausgeprägt ist, die bezüglich des Verkleidungsteils (4) einen Freiraum (17) definiert.

2. Isolationselement nach Anspruch 1, **dadurch gekennzeichnet, dass** der Schaumstoffkörper (W, 15) randseitig umlaufend angeordnet ist.

3. Isolationselement nach Anspruch 1 oder 2, **dadurch gekennzeichnet, dass** der Schaumstoffkörper (W, 15) eine in Querrichtung gesehen konvex gewölbte Decke (16) aufweist.

4. Isolationselement nach einem der Ansprüche 1 bis 3, **dadurch gekennzeichnet, dass** die Nut (14) mindestens eine Hinterschnittflanke aufweist.

5. Isolationselement nach einem der Ansprüche 1 bis 4, **dadurch kennzeichnet, dass** die Nut (14) mit dem Schaumstoffkörper (W, 15) ausgefüllt ist.

6. Isolationselement nach einem der Ansprüche 1 bis 5, **dadurch gekennzeichnet, dass** es aus einer geschlossenporigen Schaumstofflage besteht.

## Claims

1. An insulating element (5) to be arranged between an inner wall (3) of a motor vehicle door (1) and a cladding part (4) to be attached to the inner wall (3), wherein the insulating element (5) is designed as a foam layer and can be clamped at the periphery thereof without gluing in a clamping area (K) between the cladding part (4) and the inner wall (3) **characterised by**
a bead-shaped foam body (W, 15) that is retained in a groove (14) formed in the periphery of the insulating element (5) in the clamping area (K), wherein
a) the groove (14) is formed in the side of the insulating element (5) facing away from the motor vehicle door (1) such that, after the cladding element (4) is secured to the inner wall (3) of the motor vehicle door (1), the foam body (W, 15) fits in contact with the cladding part (4) by the clamping action, and a protuberance (28) for positive holding the insulating element against a positive locking embossed edge portion (6) in the inner wall (3) of the motor vehicle door is formed in the area of the groove (14) on the side of the insulating element (5) facing the motor vehicle door (5), or
b) the groove (14) is formed in the side of the insulation element (5) facing the motor vehicle door (1) such that, after the cladding part (4) is secured to the inner wall (3) of the motor vehicle door (1), the foam body (W, 15) fits in contact with the inner wall (3) of the motor vehicle door (1) by the clamping action, and a protuberance (28) is formed in the area of the groove (14) on the side of the insulating element (5) facing away from the motor vehicle door (5), thereby defining a clearance (17) relative to the cladding part (4).

2. The insulating element according to claim 1, **characterised in that** the foam body (W, 15) is disposed running around the edge.

3. The insulating element according to claim 1 or 2, **characterised in that** the foam body (W, 15) has a cover (16) that is curved convexly when viewed in transverse direction.

4. The insulating element according to any of claims 1 to 3, **characterised in that** the groove (14) has at least one undercut flank.

5. The insulating element according to any of claims 1 to 4, **characterised in that** the groove (14) is filled with the foam body (W, 15).

6. The insulating element according to any of claims 1 to 5, **characterised in that** it is made from a closed-pore foam layer.

## Revendications

1. Elément d'isolation (5) destiné à être agencé entre une paroi interne (3) d'une porte d'un véhicule automobile (1) et un élément d'habillage (4) destiné à être fixé sur la paroi interne (3) de la porte du véhicule automobile, l'élément d'isolation (5) étant constitué sous la forme d'une couche de mousse et pouvant être serré sans collage côté bordure dans une zone de serrage (K) entre l'élément d'habillage (4) et la paroi interne (3), **caractérisé par** un corps en mousse sous forme d'un bourrelet (W, 15), qui est tenu dans une rainure (14) formée côté bordure dans l'élément d'isolation (5),
a) la rainure (14) étant formée dans la face de l'élément d'isolation (5) qui est opposée à la porte du véhicule automobile, pour qu'après la fixation de l'élément d'habillage (4) sur la paroi interne (3) de la porte du véhicule (1) le corps en mousse (W, 15) s'applique sous effet de serrage sur l'élément d'habillage et dans la zone de la rainure (14), sur la face de l'élément d'isolation (5) qui est dirigée vers la porte du véhicule automobile (1), une protubérance (28) destiné à le tenir par complémentarité de forme s'étendant sur une empreinte de bordure (6) de la paroi interne (3) de la porte du véhicule (1) ou
b) la rainure (14) étant formée dans la face de l'élément d'isolation (5) qui est dirigée vers la porte du véhicule automobile (1), pour qu'après la fixation de l'élément d'habillage (4) sur la paroi interne (3) de la porte du véhicule automobile (1), le corps en mousse (W, 15) s'applique sous effet de serrage sur la paroi interne (3) de la porte du véhicule automobile (1) et dans la zone de la rainure (14), sur la face de l'élément d'isolation (5) qui est opposée à la porte du véhicule (1), une protubérance (28) s'étendant et définissant un espace (17) par rapport à l'élément d'habillage (4).

2. Elément d'isolation selon la revendication 1, **caractérisé en ce que** le corps en mousse est situé en position périphérique du côté de la bordure.

3. Elément d'isolation selon l'une quelconque des revendications 1 ou 2, **caractérisé en ce que** le corps en mousse (W, 15) présente un recouvrement (16) convexe dans le sens transversal.

4. Elément d'isolation selon l'une quelconque des revendications 1 à 3, **caractérisé en ce que** la rainure présent au moins un flanc en contre-dépouille.

5. Elément d'isolation selon l'une quelconque des revendications 1 à 4, **caractérisé en ce que** la rainure (14) est remplie par le corps en mousse (W, 15).

6. Elément d'isolation selon l'une quelconque des revendications 1 à 5, **caractérisé en ce qu'**il est constitué d'une couche de mousse à pores fermées.
